# EUROPÄISCHE PATENTANMELDUNG

(11) **EP 3 845 400 A1**
(43) Veröffentlichungstag der Anmeldung: **07.07.2021**
(21) Anmeldenummer: 20150292.9
(22) Anmeldetag: 04.01.2020
(51) Int. Cl.: B60G 5/04, B60G 11/14, B60G 11/26, B60G 15/06, B62D 61/12

(54) **FAHRGESTELL FÜR FAHRZEUGANHÄNGER UND FAHRZEUGANHÄNGER**

(71) Anmelder: Trachsel Technik AG, 8932 Mettmenstetten (CH)
(72) Erfinder: Trachsel, Remo, 8932 Mettmenstetten (CH)
(74) Vertreter: Rutz & Partner

(57) **Zusammenfassung**

Das Fahrwerk (1), das für einen Fahrzeuganhänger (10) vorgesehen ist, umfasst eine Bremsanlage (9) sowie zwei in Laufrichtung des Fahrwerks (1) ausgerichtete und miteinander verbundene Fahrwerkteile (1A, 1B), die je einen Achsrahmen (14) aufweisen, die parallel zueinander ausgerichtet und frontseitig und rückseitig mit Radaufhängungen (15) und Rädern (11) versehen sind. Erfindungsgemäss ist vorgesehen, dass jeder der Achsrahmen (14) zwei Rahmenteile (14A, 14B) aufweist,
a) die an den voneinander abgewandten Enden je eine der Radaufhängungen (15) halten,
b) die an den einander zugewandten Enden durch eine Gelenkachse (12), welche die beiden Fahrwerkteile (1A, 1B) miteinander verbindet, drehbar miteinander verbunden sind, und
c) die durch wenigstens ein Kraftübertragungsteil (16) miteinander verbunden sind, welches mit einem ersten Endstück beabstandet von der Gelenkachse (12) mit dem einen Rahmenteil (14A) und mit einem zweiten Endstück beabstandet von der Gelenkachse (12) mit dem anderen Rahmenteil (14B) verbunden ist.

## Beschreibung

Die vorliegende Erfindung betrifft ein Fahrgestell für Fahrzeuganhänger und einen Fahrzeuganhänger mit einem solchen Fahrgestell.

Fahrzeuganhänger, insbesondere landwirtschaftliche Anhänger, werden in unwegsamem Gelände bewegt und mit hohen Lasten beladen, weshalb besondere Anforderungen an das Fahrwerk resultieren. Hinsichtlich der hohen Lasten werden oft Fahrwerke mit Tandemachsen oder Doppelachsen, die einen höheren Achsabstand aufweisen, verwendet.

Die DE29717765U1 offenbart einen Fahrzeuganhänger für landwirtschaftliche Fahrzeuge, der ein Tandem-Achsaggregat mit sperrbarer Nachlauflenkachse aufweist. Die beiden Achsen des Achsaggregats, die von einem Paar von Rädern auf der einen Seite des Anhängers zu einem anderen Paar von Rädern auf der anderen Seite des Anhängers verlaufen, sind beidseits von einem Achsrahmen in der Ausgestaltung von Federpaketen gehalten. Durch die Federpakete werden Erschütterungen bei der Fahrt in einem gewissen Umfang elastisch gedämpft.

Die WO201835562A1 offenbart einen Fahrzeuganhänger mit einem Tandem-Achsaggregat mit starren Achsrahmen, an denen die Räder durch Federn und Schwenkarme elastisch aufgehängt sind. Diese Radaufhängung, mit der die Vertikaldynamik des Anhängers vorteilhaft beeinflusst wird, ist mit relativ hohen Kosten verbunden.

Die DE3148041A1 offenbart einen Fahrzeuganhänger mit einem Tandem-Achsaggregat für das Beladen und den Transport von Rundholz. Zum Beladen von Rundholz ist eine Ladevorrichtung vorgesehen. Bei diesem Achsaggregat verlaufen die Radachsen nicht durchgehend, sondern sind als Achsstummel ausgebildet, die paarweise je von zugeordneten Achsrahmen gehalten sind.

Die beiden Achsrahmen sind durch eine durchgehende Zentralachse miteinander verbunden. Beschrieben sind Stabilitätsprobleme solcher Fahrzeuge, denen jedoch nicht durch Anpassung des Fahrwerks, sondern durch eine entsprechende Ausgestaltung der Anhängerkupplung begegnet wird.

Die DE2025225A1 offenbart einen Fahrzeuganhänger mit einem Tandem-Achsaggregat mit schwenkbar gehaltenen Achsrahmen, die es erlauben, eine der Achsen anzuheben, um mit nur einem Radpaar rangieren zu können. Der Fahrzeuganhänger kann somit wahlweise im Ein-Achs-Modus für das Rangieren und im Zwei-Achs-Modus für den Transport schwerer Lasten betrieben werden.

Die DE10215033A1 offenbart einen Fahrzeuganhänger mit zwei hintereinander angeordneten, mit Rädern versehenen Achsen und mindestens einem Druckmittelzylinder, der zum Absenken einer der Achsen mit einem unter Druck stehenden Medium beaufschlagbar ist. Ein Bremskraftregler kann zudem die Position der federelastisch gelagerten ersten Achse erfassen und in Abhängigkeit davon die Bremskraft der Räder der ersten Achse steuern. Bei einer Durchbiegung der Lagerfedern verändert sich die vertikale Lage der Achse und der entsprechend angeordnete Bremskraftregler wird betätigt. Eine Bremskraftregelung für die Räder der zweiten Achse ist hingegen nicht vorgesehen.

Die DE4438222A1 offenbart eine Vorrichtung zur Steuerung einer Bremsanlage eines Fahrzeuganhängers, die den Bremsvorgang abhängig von Bremssignalen des Fahrers und Lastsignalen, die mittels einer Messvorrichtung an wenigstens einer Achse erfasst werden, steuert. Beschrieben ist ein Achslastsensor an einem Luftfederbalg. Ferner wird auf Bremsanlagen verwiesen, bei denen Achslastmessungen, wie oben beschrieben, an blattgefederten Achsen vorgenommen werden.

Die DE102007027193A1 offenbart einen landwirtschaftlichen Fahrzeuganhänger mit einem Bremskraftregler, welcher in Abhängigkeit einer in einem Vorratsbehälter befindlichen Materialmenge einstellbar ist.

Aus den genannten Dokumenten geht hervor, dass die Anforderungen an Anhängerfahrgestelle vielfältig sind, weshalb zur Erfüllung jeder dieser Anforderungen jeweils spezielle Lösungen geschaffen wurden, die hinsichtlich des Verhaltens, des Kostenaufwandes und der gleichzeitigen Erfüllung mehrerer unterschiedlicher Funktionen jedoch kaum befriedigen.

Der vorliegenden Erfindung liegt somit die Aufgabe zugrunde, ein verbessertes Fahrgestell für Fahrzeuganhänger und einen Fahrzeuganhänger mit einem solchen Fahrgestell zu schaffen.

Das Fahrgestell soll eine einfache und kompakte Konstruktion aufweisen und zur Erfüllung mehrerer unterschiedlicher Funktionen geeignet sein, die das Fahrverhalten, die Stabilität und das Bremsverhalten des Fahrzeuganhängers vorteilhaft beeinflussen.

Die Vertikaldynamik des Fahrzeuganhängers soll mit geringem Aufwand verbessert werden und ebenfalls mit geringem Aufwand wahlweise oder automatisch an das jeweilige Gelände angepasst werden können.

Ebenso sollen die Lage und Ausrichtung des Fahrzeuganhängers insbesondere in Hanglagen an das Gelände angepasst werden können, sodass das Beladen und Entladen des Fahrzeuganhängers sowie der Transport der Güter auch in schwierigem Gelände leichter und sicherer vollzogen werden kann.

Die Bremskraftregelung soll unter Berücksichtigung der vorliegenden Lasten einstellbar sein, wobei die Erfassung der Last in einfacher Weise erfolgen soll.

Diese Aufgabe wird mit einem Fahrgestell für Fahrzeuganhänger und einem Fahrzeuganhänger gemäss Anspruch 1 bzw. 15 gelöst. Vorteilhafte Ausgestaltungen der Erfindung sind in weiteren Ansprüchen angegeben.

Das für den erfindungsgemässen Fahrzeuganhänger vorgesehene Fahrwerk umfasst eine Bremsanlage und zwei in Laufrichtung des Fahrwerks ausgerichtete und miteinander verbundene Fahrwerkteile, die je einen Achsrahmen aufweisen, die parallel zueinander ausgerichtet und frontseitig und rückseitig mit Radaufhängungen und Rädern versehen sind.

Erfindungsgemäss ist vorgesehen, dass jeder der Achsrahmen zwei Rahmenteile aufweist,
a) die an den voneinander abgewandten Enden je eine der Radaufhängungen halten,
b) die an den einander zugewandten Enden durch eine Gelenkachse, die die beiden Fahrwerkteile miteinander verbindet, drehbar miteinander verbunden sind, und
c) die durch wenigstens ein Kraftübertragungsteil miteinander verbunden sind, welches mit einem ersten Endstück beabstandet von der Gelenkachse mit dem einen Rahmenteil und mit einem zweiten Endstück beabstandet von der Gelenkachse mit dem anderen Rahmenteil verbunden ist.

Die erfindungsgemässe Fahrwerkskonstruktion weist zahlreiche Vorteile auf. Durch die Verwendung von zwei gelenkig miteinander verbundenen Rahmenteilen bei jedem der Fahrwerkteile resultiert ein einfacher Aufbau des Fahrwerks mit hoher Flexibilität.

Durch das Kraftübertragungsteil können Kräfte von den Rahmenteilen aufgenommen und Schwingungen gedämpft werden oder Kräfte auf die Rahmenteile übertragen werden, um diese zu verstellen und die Fahrdynamik des Fahrwerks und/oder die Höhe des Fahrwerks und/oder die Neigung des Fahrwerks wahlweise oder in Abhängigkeit von Messdaten oder gespeicherten Daten einzustellen. Weiterhin kann durch die Überwachung des Kraftübertragungsteils und/oder des Drehwinkels der beiden Rahmenteile die einwirkende Last der Beladung des Fahrzeuganhängers in einfacher Weise präzise bestimmt werden.

Mit nur einem Kraftübertragungsteil je an einem der Fahrwerkteile können somit zahlreiche Vorteile realisiert werden. Das einfach aufgebaute Fahrwerk, das als Basis eines multifunktionalen Systems dient oder dienen kann, kann mit geringen Kosten realisiert werden. Zudem resultiert ein robuster und kompakter Aufbau. Das Kraftübertragungsteil ist zwischen den Rahmenteilen angeordnet und nimmt weniger Raum in Anspruch.

Das wenigstens eine Kraftübertragungsteil ist vorzugsweise ein hydraulischer Dämpfer, ein pneumatischer Dämpfer oder eine Feder, z.B. eine Spiralfeder ist. Durch die Wahl des Kraftübertragungsteils können beliebige Funktionen des Fahrwerks realisiert werden. Ferner können mehrere Kraftübertragungsteile miteinander kombiniert werden. Z.B. können ein hydraulischer Dämpfer und ein mechanisches Federelement, z.B. eine Spiralfeder, die den hydraulischen Dämpfer umschliesst, vorteilhaft miteinander kombiniert werden.

Vorzugsweise ist ein hydraulisches oder pneumatisches Kraftübertragungsteil vorgesehen, welches vorzugsweise über ein Drosselrückschlagventil mit einem Medienspeicher und/oder einem hydropneumatischen Druckspeicher verbunden ist. Eine Dämpfung und Federung, mittels der Krafteinwirkungen elastisch aufgefangen werden, können somit einfach realisiert werden. Hydropneumatische Druckspeicher können in Hydrauliksystemen grosse Energiemengen bei kleinen Eigenvolumen speichern.

Aufgrund ihrer geringen Komprimierbarkeit können Hydraulikflüssigkeiten ihre Energie schlecht in begrenzten Volumen speichern. Hingegen erlaubt ihnen diese Eigenschaft die Übertragung hoher Kräfte. Im Gegensatz dazu ermöglichen die wesentlich stärker komprimierbaren Gase eine Speicherung beträchtlicher Energiemengen in geringen Volumen. Ein hydropneumatischer Druckspeicher, der die Eigenschaften dieser beiden Medientypen kombiniert, besteht aus einem Behälter, der durch eine flexible Trennwand oder Membran in zwei Kammern unterteilt ist. In einer Kammer kann die unter Druck stehende Hydraulikflüssigkeit einfliessen und in der anderen Kammer ist das komprimierbare Gas als Energiespeicher vorgesehen. Über eine Druckleitung kann hydraulische Flüssigkeit vom hydraulischen Kraftübertragungsteil zum hydropneumatischen Druckspeicher und wieder zurück fliessen. Durch ein optional vorgesehenes Drosselrückschlagventil kann dieser Durchfluss in die eine oder andere Richtung verzögert werden, um insbesondere die Vertikaldynamik entsprechend zu beeinflussen.

Das Kraftübertragungsteil kann in seinen geometrischen Abmessungen nicht komprimierbar oder elastisch komprimierbar sein. Beispielsweise ist die Länge eines nicht komprimierbaren Kraftübertragungsteils schrittweise oder kontinuierlich, z.B. durch eine Schraubverbindung, einstellbar. Sofern ein hydraulisches Kraftübertragungsteil verwendet wird, das in seinen Abmessungen im Wesentlichen unveränderbar ist, so kann durch Messung des Drucks der hydraulischen Flüssigkeit die auf das Fahrwerk einwirkende Last bestimmt werden.

Vorzugsweise werden steuerbare Kraftübertragungsteile verwendet. Z.B. werden Kraftübertragungsteile verwendet, denen ein hydraulischer oder pneumatischer Druck wahlweise zuführbar ist, um das Fahrwerk in der Höhe, in der Neigung oder in seinem Fahrverhalten zu beeinflussen einzustellen. Alternativ kann auch ein Stellmotor vorgesehen werden, der eine Schraubverbindung betätigt.

Das wenigstens eine Kraftübertragungsteil jedes Fahrwerkteils oder die Kraftübertragungsteile der beiden Fahrwerkteile sind vorzugsweise individuell oder gemeinsam mit einer Steuervorrichtung oder Regelvorrichtung verbunden und steuerbar, insbesondere um deren geometrische Abmessungen und/oder deren Kompressibilität und/oder deren Federkonstante wahlweise oder in Abhängigkeit ermittelter Messwerte und Daten einzustellen.

Vorzugsweise ist der Drehwinkel, den die beiden Rahmenteile einschliessen, mittels der Steuervorrichtung oder Regelvorrichtung individuell oder gemeinsam für beide Fahrwerkteile steuerbar ist, um die Höhe und/oder Neigung des Fahrwerks einzustellen.

Vorzugsweise sind auch das Federverhalten oder Dämpfungsverhalten des Kraftübertragungsteils mittels der Steuervorrichtung oder Regelvorrichtung individuell oder gemeinsam für beide Fahrwerkteile einstellbar.

Vorzugsweise sind die Eigenschaften und Zustände bzw. Einstellungen des Fahrwerks in Abhängigkeit von äusseren Einwirkungen, der Last der Ladung, gegebenenfalls der Verteilung der Last oder Ladung auf dem Fahrzeuganhänger, und/oder der Topologie des Geländes bzw. entsprechenden Messwerten oder gespeicherten Daten einstellbar.

Dazu wird vorzugsweise eine Messvorrichtung vorgesehen ist, mittels der
a) der Drehwinkel, den die beiden Rahmenteile einschliessen; und/oder
b) der hydraulischer oder pneumatische Druck im Kraftübertragungsteil; und/oder
c) der Abstand zwischen zwei Punkten der beiden Rahmenteile; und/oder
d) die auf das Kraftübertragungsteil einwirkende Kraft;
messbar ist. Ferner können auch Vibrationen und Erschütterungen des Fahrwerks gemessen werden, welche einzustellende Änderungen der Fahrdynamik erfordern.

Die beiden Punkte, an denen der Abstand zwischen den Rahmenteilen gemessen wird, sind z.B. an den Enden des Kraftübertragungsteils vorgesehen, die vorzugsweise mittels Flanschelementen drehbar mit den Rahmenteilen verbunden sind. Fahrwerke sind üblicherweise Metallkonstruktionen, können aber auch andere Materialien umfassen.

Das erfindungsgemässe Fahrwerk erlaubt es zudem in vorteilhafter Weise, die Bremskraft an die auf dem Fahrzeuganhänger mitgeführte Last anzupassen.

Dazu weist die Bremsanlage einen Bremskraftregler auf, mittels dessen eine einem Stellelement zugeführte Steuergrösse insbesondere in Abhängigkeit
a) des Drehwinkels, den die beiden Rahmenteile einschliessen; oder
b) des hydraulischen oder pneumatischen Drucks im Kraftübertragungsteil; oder
c) des Abstand zwischen zwei Punkten der beiden Rahmenteile; oder
d) der auf das Kraftübertragungsteil einwirkende Kraft;
einstellbar ist.

In einer weiteren bevorzugten Ausgestaltung ist ein hydraulischer Aktor vorgesehen, der mit den frontseitigen oder rückseitigen Rahmenteilen verbunden ist, und der von der Steuervorrichtung ansteuerbar ist, um die frontseitigen oder rückseitigen Rahmenteile anzuheben. Durch die Verwendung der gelenkig miteinander gekoppelten Rahmenteile ist es besonders einfach möglich, zueinander korrespondierende Rahmenteile und Räder anzuheben oder abzusenken, um zwischen dem Ein-Achs-Modus und dem Zwei-Achs-Modus umzuschalten.

Die Steuervorrichtung oder Regelvorrichtung umfasst vorzugsweise einen Steuerrechner mit einem Steuerprogramm, mittels dessen das Kraftübertragungsteil oder damit verbundene Aktoren und/oder der zum Anheben der frontseitigen oder rückseitigen Rahmenteile vorgesehene Aktor betätigbar ist. Es sind hingegen auch Regelungssysteme z.B. durch mechanische Kopplung realisierbar, die keinen Steuerrechner erfordern.

In einer weiteren vorzugsweisen Ausgestaltung ist eine Messvorrichtung, wie eine Kamera, zur Ermittlung von Topologie-Daten des Geländes vorgesehen. Alternativ können Topologie-Daten lokal oder online über ein Telekommunikationsnetz aus einem Speicher abrufbar sein, so dass die Kraftübertragungsteile von der Steuervorrichtung entsprechend den Topologie-Daten ansteuerbar sind, insbesondere um die Fahrdynamik und/oder die Höhe und/oder die Neigung des Fahrwerks einzustellen. Die Fahrwerkseigenschaften können auf diese Weise, vorzugsweise zusätzlich unter Berücksichtigung der Last der Beladung, automatisch an die Geländetopographie angepasst werden.

Das erfindungsgemässe Fahrwerk kann weiter entsprechend den gegebenen Anforderungen konfiguriert werden. Dabei kann vorgesehen werden, dass die frontseitigen Radaufhängungen durch eine durchgehende Radachse miteinander oder durch Achsstummel mit den zugeordneten Rahmenteilen verbunden sind und/oder dass die rückseitigen Radaufhängungen durch eine durchgehende Radachse miteinander oder durch Achsstummel mit den zugeordneten Rahmenteilen verbunden sind. Durchgehende Radachsen können bei Fahrzeuganhängern vorgesehen werden, die sehr hohen Lasten ausgesetzt sind, bei denen an die Fahrdynamik geringere Anforderungen gestellt werden oder bei denen ein Radpaar wahlweise angehoben werden soll.

Nachfolgend wird die Erfindung anhand von Zeichnungen näher erläutert. Dabei zeigt:
- Fig. 1a: einen bekannten Fahrzeuganhänger 10', der mit einem bekannten Fahrwerk 1' ausgerüstet ist und der durch Ausrüstung mit einem erfindungsgemässen Fahrwerk gemäss Fig. 2b zu einem erfindungsgemässen Fahrzeuganhänger 10 umgerüstet werden kann;
- Fig. 1b: das als Tandem-Achsaggregat ausgebildete Fahrwerk 1' des Fahrzeuganhängers 10' von Fig. 1a, mit zwei Fahrwerkteilen 1A, 1B, die durch zwei Achsen 12 miteinander verbunden sind, die von einem Paar von Radaufhängungen 15 auf der einen Seite des Fahrwerks 1' zu einem anderen Paar von Radaufhängungen 15 auf der anderen Seite des Fahrwerks 1' verlaufen, und die beidseits von einem Achsrahmen 14 in der Ausgestaltung von Federpaketen gehalten sind;
- Fig. 2a: einen erfindungsgemässen Fahrzeuganhänger 10 mit einem schematisch gezeigten Fahrzeugaufbau 2 und einem erfindungsgemässen Fahrwerk 1 mit zwei Fahrwerkteilen 1A, 1B, die nur durch eine Achse 12 miteinander verbunden sind, die beidseits je zwei gegeneinander drehbare Rahmenteile 14A, 14B hält, die je mit einer Radaufhängung 15 versehen und die durch ein Kraftübertragungsteil 16 miteinander verbunden sind;
- Fig. 2b: das Fahrwerk 1 von Fig. 2a ohne den Fahrzeugaufbau 2;
- Fig. 3a: zeigt das Fahrwerk 1 von Fig. 2b von der Seite mit Blick auf eines der Fahrwerkteile 1A, 1B mit einer Bremsanlage 8 zur lastabhängigen Bremskraftregelung und mit einer pneumatischen Feder 81, die mit dem Kraftübertragungsteil 16 zusammenwirkt, und das Fahrwerk eines federelastisch zu dämpfen;
- Fig. 3b: das Fahrwerkteil 1A; 1B von Fig. 3a mit einer Steuerung und/oder Regelung 8 zur Einstellung der Fahrdynamik und zum Anheben einer Achse bzw. zueinander korrespondierender Rahmenteile 14B der beiden Fahrwerkteile 1A, 1B;
- Fig. 4a: eines der Fahrwerkteile 1A, 1B des Fahrwerks 1 von Fig. 2b, das mit einem Kraftübertragungsteil 16 in der Ausgestaltung einer Feder 16 und mit einer Messvorrichtung 925 zur Messung der Ausdehnung der Feder 16 bzw. der dazu proportionalen Last der Beladung des Fahrzeuganhängers 10 versehen ist; und
- Fig. 4b: das Fahrwerkteil 1A; 1B von Fig. 4a unter erhöhter Last mit weiter komprimierter Feder 16.

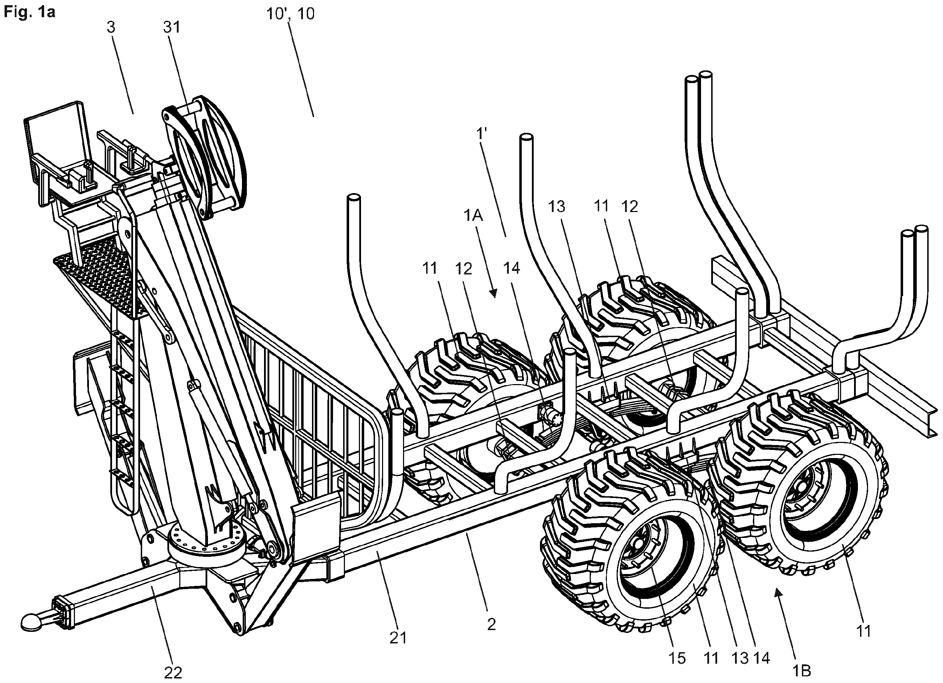

Fig. 1a zeigt einen bekannten Fahrzeuganhänger 10', der mit einem bekannten Fahrwerk 1' und einer Ladevorrichtung 3 mit einem Ladewerkzeug 31 ausgerüstet ist, mittels der Rundholz auf den Fahrzeuganhänger 10' geladen werden kann. Probleme solcher Fahrzeuganhänger 10' sind in der einleitend genannten DE3148041A1 beschrieben. Insbesondere bei der Bedienung solcher Fahrzeuganhänger 10' ist es wünschenswert, wenn dieser horizontal und dessen Ladevorrichtung 3 vertikal ausgerichtet ist, sodass von der Ladevorrichtung 3 keine unerwünschten Kräfte und Drehmomente auf den Fahrzeuganhänger 10' einwirken.

Der Fahrzeuganhänger 10' weist einen Fahrzeugaufbau 2 mit einer auf dem Fahrwerk 1' ruhenden Ladebrücke 21 auf, an die frontseitig eine Deichsel 22 anschliesst.

Das Fahrwerk 1', das als Tandem-Aggregat ausgebildet ist, umfasst nebst einer Bremsanlage zwei in Laufrichtung des Fahrwerks 1' ausgerichtete und durch Radachsen 12 miteinander verbundene Fahrwerkteile 1A, 1B, die je einen beidseits mit den Radachsen 12 verbundenen Achsrahmen 14 aufweisen, die parallel zueinander ausgerichtet und frontseitig und rückseitig mit Radaufhängungen 15 und Rädern 11 versehen sind. In der Mitte sind die Achsrahmen 14 mit Lagervorrichtungen 13 versehen, auf die die Ladebrücke 21 bzw. Längsprofile der Ladebrücke 21 aufgesetzt sind. Mittels dieses Fahrwerks 1' ist die Ladebrücke 21 somit in einem gewissen Umfang federelastisch gehalten. Die Funktionalität dieses Fahrwerks 1' ist beschränkt.

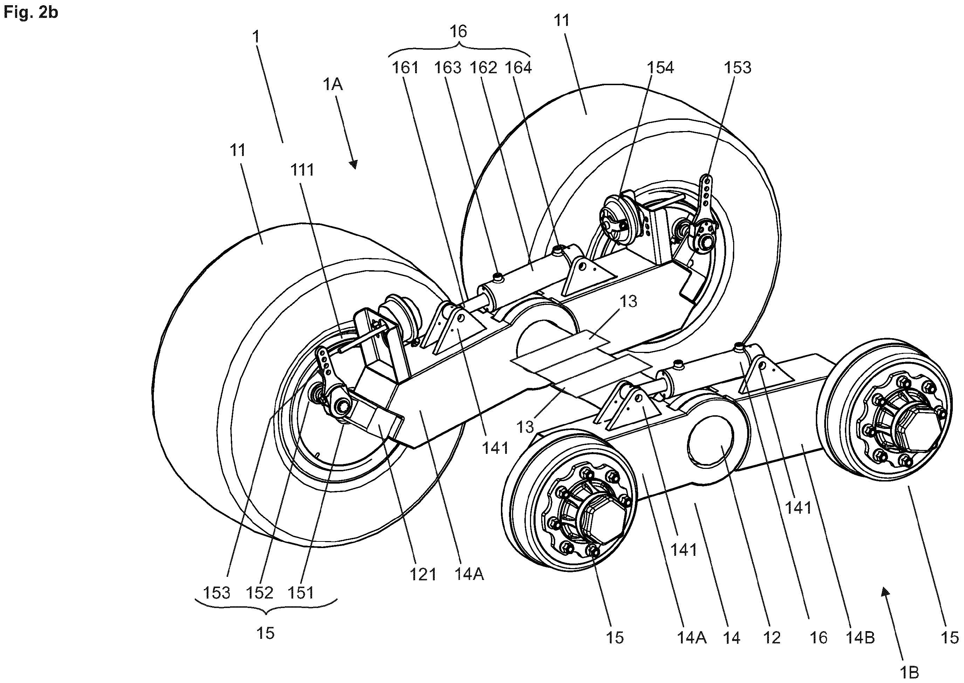

Der bekannte Fahrzeuganhänger 10' kann hingegen mit einem erfindungsgemässen Fahrwerk 1 gemäss Fig. 2b ausgerüstet werden, um einen erfindungsgemässen Fahrzeuganhänger 10 mit erweiterten Funktionalitäten und verbessertem Fahrverhalten zu schaffen.

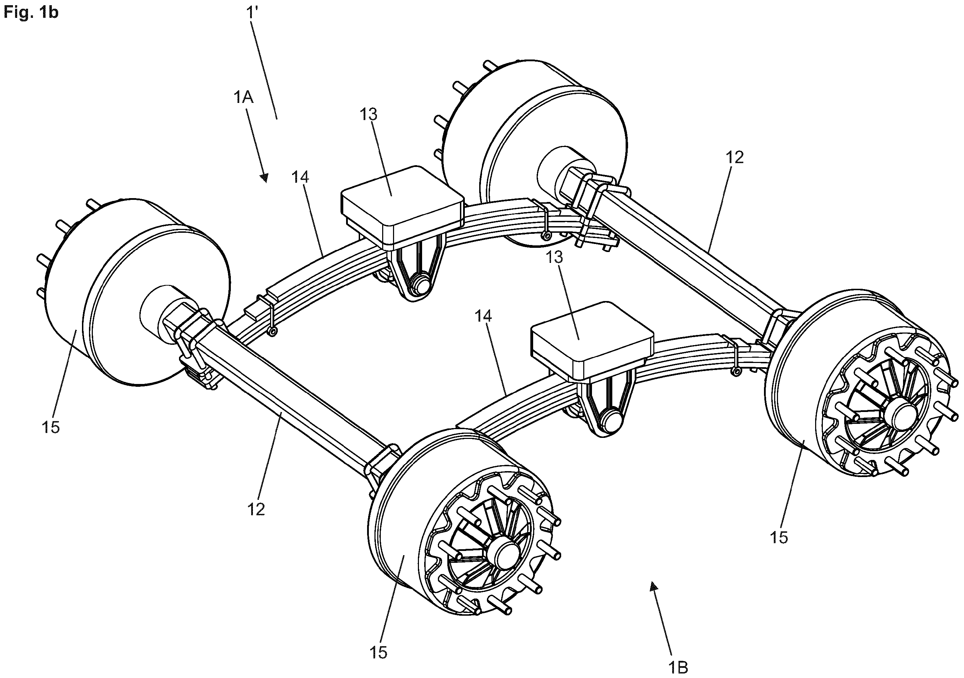

Fig. 1b zeigt das als Tandem-Achsaggregat ausgebildete Fahrwerk 1' des Fahrzeuganhängers 10' von Fig. 1a, mit zwei Fahrwerkteilen 1A, 1B, die durch zwei Achsen 12 miteinander verbunden sind, die von einem Paar von Radaufhängungen 15 auf der einen Seite des Fahrwerks 1' zu einem anderen Paar von Radaufhängungen 15 auf der anderen Seite des Fahrwerks 1' verlaufen, und die beidseits von Achsrahmen 14 in der Ausgestaltung von Federpaketen gehalten sind. Auf den Achsrahmen 14 sind Lagervorrichtungen 13 montiert, auf denen die Ladebrücke 21 abgestützt wird.

Anhängerfahrgestelle sind ferner in Hoepke/Breuer, Nutzfahrzeugtechnik, 8. Auflage, Wiesbaden 2016, Seite 248 ff., beschrieben. Mechanische Achsaggregate sind in Seite 262 ff. beschrieben.

Systeme zur Beeinflussung der Vertikaldynamik, die auch für Fahrzeuganhänger einsetzbar sind, sind z.B. in Breuer/Rohrbach-Kerl, Fahrzeugdynamik, Mechanik des bewegten Fahrzeugs, Wiesbaden 2015, Seite 203, Kapitel 6, beschrieben.

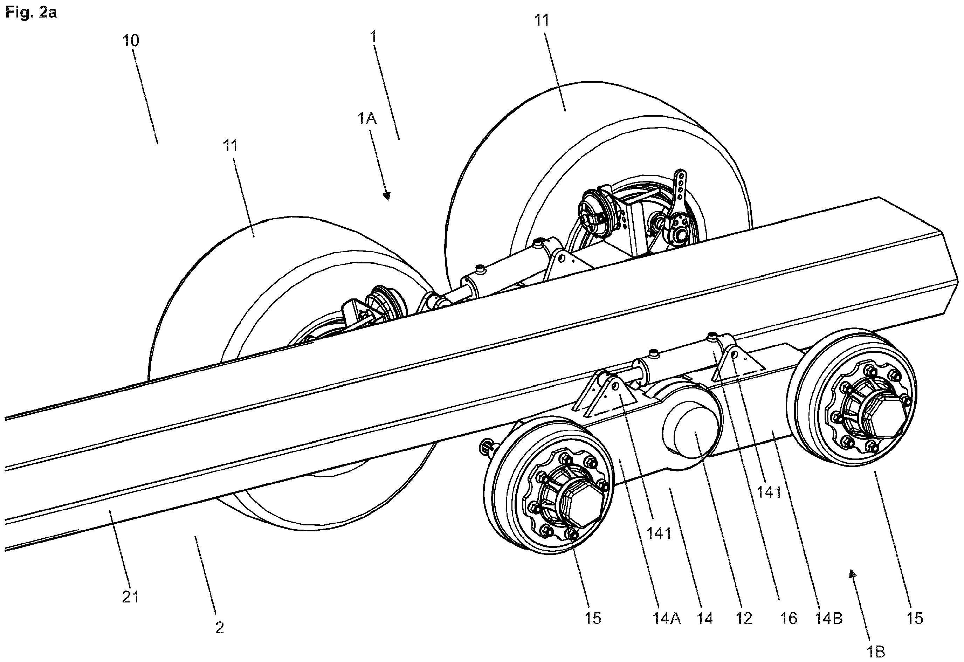

Fig. 2a zeigt einen erfindungsgemässen Fahrzeuganhänger 10 mit einem schematisch gezeigten Fahrzeugaufbau 2 und einem erfindungsgemässen Fahrwerk 1 mit zwei Fahrwerkteilen 1A, 1B, die nur durch eine Gelenksachse 12 miteinander verbunden sind, die beidseits zwei gegeneinander drehbare Rahmenteile 14A, 14B eines Achsrahmens 14 hält. Jeder Achsrahmen 14 ist somit zweiteilig ausgebildet und umfasst zwei Rahmenteile 14A, 14B, die gelenkig bzw. durch die Gelenkachse 12 miteinander verbunden sind.

Die Rahmenteile 14A, 14B, die gleiche oder verschiedene Abmessungen aufweisen
a) halten an den voneinander abgewandten Enden je eine der Radaufhängungen 15,
b) sind an den einander zugewandten Enden durch die Gelenkachse 12 drehbar miteinander verbunden, und
c) sind durch ein Kraftübertragungsteil 16 miteinander verbunden, welches mit einem ersten Endstück beabstandet von der Gelenkachse 12 mit einem Flanschelement 141 des einen Rahmenteils 14A und mit einem zweiten Endstück beabstandet von der Gelenkachse 12 mit einem Flanschelement 141 des anderen Rahmenteils 14B verbunden ist.

Fig. 2b zeigt das Fahrwerk 1 von Fig. 2a ohne den Fahrzeugaufbau 2. Es ist sichtbar, dass die Fahrwerkteile 1A, 1B nur durch die eine Gelenkachse 12 miteinander verbunden sind, auf der symbolisch zwei Lagervorrichtungen 13 angeordnet sind, wie sie z.B. in Fig. 1b gezeigt sind. Anstelle mehrerer Lagervorrichtungen 13 kann bedarfsweise auch nur eine Lagervorrichtung 13 eingesetzt werden. Der Fahrzeugaufbau 2 des Fahrzeuganhängers 10' von Fig. 1a kann daher auf das erfindungsgemässe Fahrwerk 1 von Fig. 2b aufgesetzt werden, um einen erfindungsgemässen Fahrzeuganhänger 10 zu schaffen, der optional mit einer Ladevorrichtung 3 versehen sein kann.

Die Radaufhängungen 15 des Fahrwerks von Fig. 2b umfassen ein Radlager 151 sowie eine Bremse 152, z.B. eine Trommelbremse oder Scheibenbremse, die mittels eines Bremshebels 153 von einem hydraulischen Aktor 154 betätigbar ist. Auf die Radaufhängung 15 sind die Felgen 111 der Räder 11 aufgesetzt (vorne sind die Felgen und Räder entfernt).

Im Radlager 151 ist ein Achsstummel 121 gelagert, der mit dem zugehörigen Rahmenteil 14A bzw. 14B verbunden ist. Die Achsstummel 121 der beiden Fahrwerkteile 1A, 1B sind in der Ruhelage des Fahrwerks 1 auf ebenem Boden zumindest annähernd koaxial zueinander ausgerichtet. Während der Fahrt können die Räder 11 hingegen individuell der Topologie des befahrenen Bodens folgen. Bereits durch diese Massnahmen ergibt sich im Vergleich zum Fahrwerk 1' von Fig. 1b ein verbessertes Fahrverhalten.

Das Fahrverhalten bzw. die Fahrdynamik des Fahrwerks kann durch das Kraftübertragungsteil 16, welches die beiden Rahmenteile 14A und 14B miteinander verbindet, wesentlich beeinflusst werden. Weiterhin können die Höhe und die Neigung der Ladebrücke 21 wahlweise eingestellt oder vorzugsweise automatisch geregelt werden, sodass diese stets horizontal ausgerichtet ist oder eine vorbestimmte Neigung aufweist.

In der in Fig. 2b gezeigten Ausgestaltung des Fahrwerks 1 ist das Kraftübertragungsteil 16 als hydraulisches oder pneumatisches Element ausgebildet, das einen Stössel 161, der mit dem vorderen Rahmenteil 14A verbunden ist, und einen Zylinder 162, der mit dem hinteren Rahmenteil 14B verbunden ist, umfasst.

Sofern ein pneumatisches Kraftübertragungsteil 16 eingesetzt wird, kann dieses die Relativbewegungen der Rahmenteile 14A, 14B federelastisch dämpfen. Ein hydraulischer Dämpfer, der kaum federelastisch ist, erlaubt hingegen die Einstellung des Drehwinkels der Rahmenteile 14A, 14B und kann zu einem elastischen Federsystem erweitert werden, wie dies nachstehend beschrieben ist.

Durch Änderung des Drucks in den hydraulischen oder pneumatischen Kraftübertragungsteilen 16 kann die auf die Rahmenteile 14A, 14B einwirkende Kraft eingestellt werden, um die Rahmenteile 14A, 14B beider Fahrwerkteile 1A, 1B individuell gegeneinander zu drehen. Auf diese Weise kann die Ladebrücke angehoben, geneigt oder vertikal horizontal ausgerichtet werden. Ferner kann eine Anpassung an die einwirkende Last vorgenommen werden.

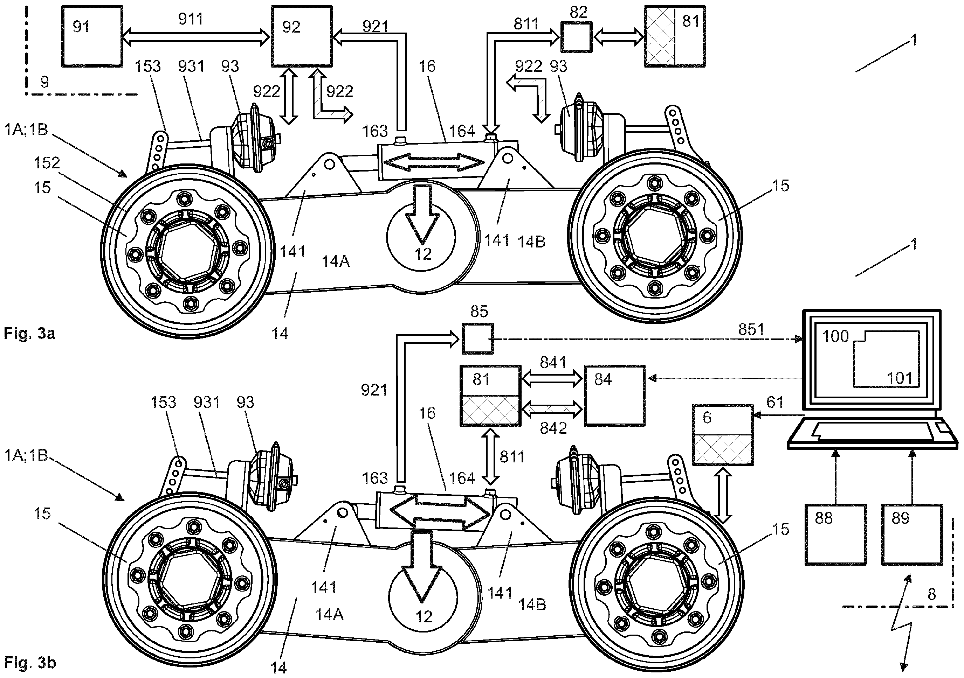

Für die Zufuhr oder Entnahme des Mediums oder für die Messung des Drucks des Mediums weist der Zylinder 162 zwei Öffnungen auf. Durch die Öffnung 164 kann das Medium durch Bewegung des Stössels 161 aus dem Zylinder 162 verdrängt werden und wieder zurückfliessen. Die Öffnung 163 erlaubt es erfindungsgemäss, den Druck des Mediums zu messen und z.B. einem Bremskraftregler 92 (siehe Fig. 3a) zuzuführen, welcher die Bremskraft entsprechend dem gemessenen Druck des Mediums bzw. entsprechend der Anhängelast einstellen kann.

Die beschriebenen Einstellungen des Fahrwerks 1 können für beide Fahrwerkteile 1A, 1B individuell oder gemeinsam vorgenommen werden. Nachstehend wird dies für jeweils eines der Fahrwerkteile 1A, 1B beschrieben. Dabei ist zu beachten, dass die beschriebenen Funktionen wahlweise einzeln oder in Kombination realisiert werden können. Elemente der Bremsanlage und Elemente zur Einstellung der Eigenschaften und Funktionen des Fahrwerks 1, insbesondere betreffend die Fahrdynamik, können daher wahlweise kombiniert oder einzeln bzw. alternativ realisiert werden.

Fig. 3a zeigt das Fahrwerk 1 von Fig. 2b von der Seite mit Blick auf eines der Fahrwerkteile 1A, 1B. Das Fahrwerk 1 weist gemeinsam für beide Fahrwerkteile 1A, 1B oder individuell für jedes der Fahrwerkteile 1A, 1B eine Bremsanlage oder ein Bremssystem 8 auf.

Bremssysteme, die auch bei erfindungsgemässen Fahrwerken einsetzbar sind, sind z.B. in Heißing/Ersoy/Gies, Fahrwerkhandbuch, Wiesbaden 2011, Seite 166, Kapitel 3.3, beschrieben. Dort ist in Bild 3-33 ein hydraulisches Bremssystem mit einem von einem Bremspedal betätigten Unterdruck-Bremskraftverstärker gezeigt, an den ein Tandem-Hauptbremszylinder anschliesst, von dem eine erste Bremsleitung zu Radbremsen an der Frontseite des Fahrwerks und eine zweite Bremsleitung zu einem Bremskraftregler geführt ist, von dem ein geregelter Bremsdruck an die Radbremsen an der Hinterseite des Fahrwerks geführt wird.

Beim erfindungsgemässen Fahrwerk kann ein solches Bremssystem 9 zum Einsatz gelangen, welches einen Bremskraftregler 92 für die Bremsen der Hinterräder und der Vorderräder oder einen Bremskraftregler 91 für die Bremsen der Hinterräder und/oder der Vorderräder aufweist.

In dieser vorzugsweisen Ausgestaltung erlaubt die Bremsanlage 9 die lastabhängige Bremskraftregelung. Dazu wird über eine Messleitung 921 der Druck im hydraulischen oder pneumatischen Kraftübertragungsteil 16 an einem Messeingang 163 des Kraftübertragungsteils 16 gemessen und an einen Bremskraftregler 92 übertragen, dessen Eingang über eine Eingangsleitung 911 vorzugsweise mit einem Bremskraftverstärker und einem Bremszylinder 91 verbunden ist. Über Bremsleitungen 922 ist der Bremskraftregler 92 mit Aktoren 93 verbunden, die über einen ausfahrbaren Stössel oder Kolben einen Bremshebel 153 der Radbremsen 152 entsprechend betätigen. Bremsanlagen in anderer Ausgestaltung sind gleicherweise unter Verwendung der erfindungsgemässen Lösung realisierbar.

Vorzugsweise wird ein automatisch lastabhängiger Bremskraftregler von WABCO z.B. vom Typ ALB 475 71 eingesetzt. Bei diesem Regler liegt an einem Eingang 1 (Bezugszeichen gemäss Schema von WABCO) der eingesteuerte Druck des Bremskraftverstärkers und Bremszylinders 91 und an Ausgängen 2 der ausgesteuerte Bremsdruck an, der über die Bremsleitungen 922 den Radbremsen zugeführt wird. Zwei Eingängen 41, 42 wird über die Messleitung 921 der Druck des hydraulischen oder pneumatischen Mediums des Kraftübertragungsteils 16 von dessen Messeingang 163 zugeführt.

Auf diese Weise kann das Kraftübertragungsteil 16 elegant zur Messung der einwirkenden Last und zur Abgabe einer Messgrösse verwendet werden. Mit steigender Last wird vom Bremskraftverstärker 92 die Bremskraft erhöht.

Ferner ist gezeigt, dass in einer vorzugsweisen Ausgestaltung das hydraulische Medium durch einen Transferport 164 aus dem hydraulischen Kraftübertragungsteil 16 durch eine Transferleitung 811 in einen Behälter 81 und wieder zurück gefördert werden kann. Vorzugsweise wird ein Behälter 81 mit zwei durch eine bewegbare Membran voneinander getrennten Kammern verwendet, der als hydropneumatischer Druckspeicher ausgestaltet ist. Die hydraulische Flüssigkeit wird in die erste Kammer des Behälters 81 eingeführt und komprimiert durch Verschiebung der Membran das gasförmige Medium in der zweiten Kammer des Behälters 81. Auf diese Weise können Laständerungen durch Kompression und Expansion des gasförmigen Mediums federelastisch aufgefangen werden.

In einer vorzugsweisen Ausgestaltung wird ein Drosselrückschlagventil 82 eingesetzt, welches die Flüssigkeit oder das Gas in eine Richtung drosselt und in die andere Richtung ungehindert durchfliessen lässt. Auf diese Weise kann die Fahrdynamik weiter beeinflusst werden, z.B. um unerwünschte Schwingungen zu dämpfen.

Das Kraftübertragungsteil 16 kann somit auch vorteilhaft zur Einstellung der Fahrdynamik verwendet werden. Vorzugsweise sind diese Einstellungen wahlweise oder automatisch steuerbar oder regelbar.

Fig. 3b zeigt das Fahrwerk 1 bzw. Fahrwerkteil 1A; 1B von Fig. 3a mit einer Steuerung oder Regelung 8 zur wahlweisen oder automatischen Einstellung der Fahrdynamik und zum Anheben einer Achse bzw. zueinander korrespondierender Rahmenteile 14B der Fahrwerkteile 1A, 1B.

In dieser Ausgestaltung kann der Druck der Flüssigkeit und/oder der Druck des Gases im Behälter 81 gesteuert oder geregelt werden, um die Fahrdynamik wahlweise oder entsprechend den Anforderungen der Last und des befahrenen Geländes einzustellen. Dazu ist ein steuerbarer Aktor 84 vorgesehen, von dem ein gasförmiges Medium über die Steuerleitung 841 und/oder eine Flüssigkeit über die Steuerleitung 842 in die entsprechende Kammer des Behälters 81 einführbar ist. Anstelle der Einführung eines flüssigen oder gasförmigen Mediums in den Behälter 81 kann auch ein erster Kolben 841 und/oder ein zweiter Kolben 842 in den Behälter 81 oder in dessen Kammer einführbar sein, z.B. um das Kammervolumen zu ändern und die pneumatische Feder vorzuspannen oder die Rahmenteile 14A, 14B des Achsrahmens 14 gegeneinander zu drehen, z.B. um die Höhe oder Neigung des Fahrwerks 1 einzustellen. Sofern der Behälter 81 nur eine Kammer für die Aufnahme des Mediums aufweist, so wird mit der durch den Aktor 84 bewirkten Druckänderung im Wesentlichen die Einstellung der Rahmenteile 14A, 14B bezweckt und Änderungen der Fahrdynamik treten in den Hintergrund. Wesentlich ist jedoch, dass beide Funktionen, die Einstellung der Höhe und/oder Neigung sowie die Beeinflussung der Fahrdynamik bei entsprechender Ausgestaltung des Fahrwerks 1 einstellbar sind. Dabei ist auch eine Arbeitsaufteilung auf mehrere Kraftübertragungsteile 16 möglich, die seriell und/oder parallel zueinander geschaltet sind.

Zur Steuerung oder Regelung der Fahrdynamik ist vorzugsweise ein Steuerrechner 100 mit einem Steuerprogramm 101 vorgesehen. Dieser Steuerrechner 100 kann im Fahrzeuganhänger 10 vorgesehen oder Teil des Fahrzeugrechners im Zugfahrzeug sein.

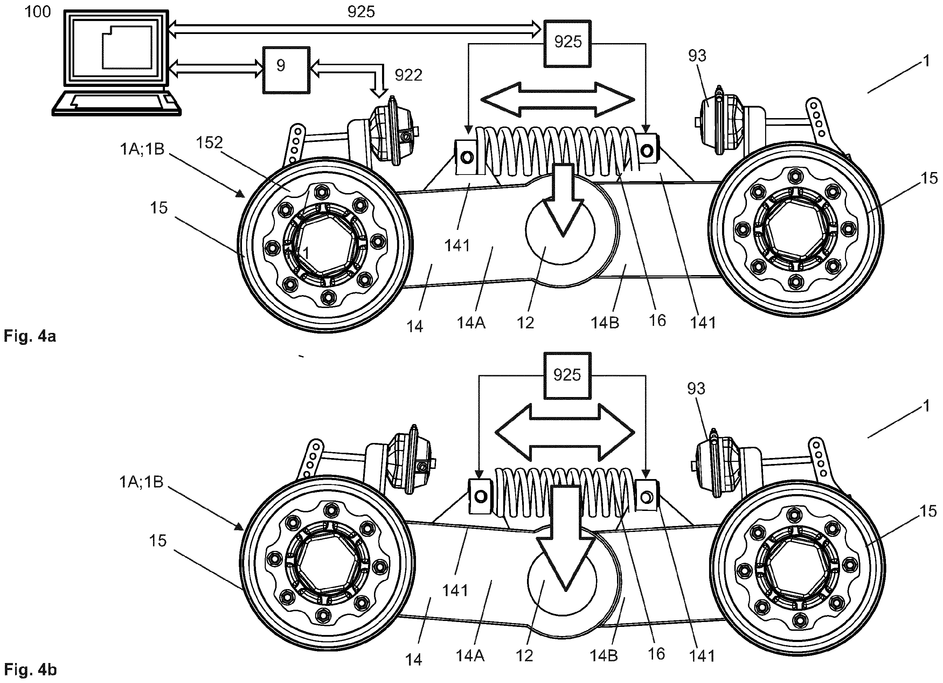

In dieser Ausgestaltung wird der durch die hydraulische oder pneumatische Messleitung 921 übertragene Druck im Kraftübertragungsteil 16 gemessen und in einem Konverter 85 in ein elektrisches Signal umgewandelt, das über eine elektrische Messleitung 851 digital oder analog an einen Eingang des Steuerrechners 100 übertragen wird. Alternativ kann die Messung gemäss der Ausgestaltung von Fig. 4a erfolgen. Der Aktor 84 und somit die Fahrdynamik und/oder die Höhe und Neigung des Fahrwerks 1 kann daher unter Berücksichtigung der einwirkenden Last der Beladung des Fahrzeuganhängers 10 betätigt werden.

In einer weiteren vorzugsweisen Ausgestaltung werden gespeicherte Daten oder Messdaten, die das aktuelle Fahrverhalten und/oder die Topologie des Geländes beschreiben von einer Messeinheit 88 oder einer Datenübertragungseinheit, einer Speichereinheit oder einem Navigationsgerät 89 geliefert. Beispielsweise ist eine Kamera 88 zur Vermessung des Geländes und/oder ein Neigungssensor 88 zur Messung der Ausrichtung der Ladebrücke 21 oder ein Navigationsgerät 89 vorgesehen, welches das befahrene Gelände beschreibt. Geeignete Neigungssensoren, die digitale oder analoge Messdaten liefern, sind z.B. von Baumer Group, CH-8501 Frauenfeld erhältlich. Geländedaten können lokal in der Speichereinheit 89 oder dezentral in einem öffentlich zugänglichen Server gespeichert sein. Die genannten Geräte oder Gerätefunktionen können wiederum in Kombination realisiert sein.

Gestützt auf die Messdaten oder die aus einem Speicher abgerufenen Daten kann die Steuerung und/oder Regelung 8 die Fahrdynamik und die weiteren Einstellungen des Fahrwerks 1 wahlweise oder automatisch an das befahrene Gelände anpassen. Sofern Erschütterungen eintreten, die z.B. durch überfahrene Steine auf einer geneigten Strasse verursacht werden, kann das Fahrwerk 1 bzw. die Ladebrücke 21 nach oben gefahren, die Ladebrücke 21 horizontal ausgerichtet und die Fahrdynamik entsprechend angepasst werden. Bei diesen Einstellungen kann die Steuerung und/oder Regelung 8 vom Anwender vorgegebene Steuerdaten berücksichtigen.

In einer weiteren vorzugsweisen Ausgestaltung alternativ oder in Kombination mit den zuvor beschriebenen Ausgestaltungen der Bremsvorrichtung 9 und/oder den weiteren Fahrwerkseinstellungen ist vorzugsweise wenigstens ein hydraulischer Aktor 6 vorgesehen, mittels dessen die zueinander korrespondierenden Rahmenteile 14B z.B. der Hinterachse wahlweise angehoben oder abgesenkt werden können, um zwischen dem Ein-Achs-Modus und dem Zwei-Achs-Modus beim Betrieb des Fahrwerks 1 umzuschalten. Der Aktor 6 ist einerseits mit dem Chassis des Fahrzeuganhängers 10, gegebenenfalls einem Teil der Ladebrücke 21 und andererseits mit den zueinander korrespondierenden Rahmenteilen 14B, gegebenenfalls einer Fahrwerkachse, welche die zueinander korrespondierenden Rahmenteile 14B miteinander verbindet, verbunden. Vorzugsweise sind zwei Aktoren 6 vorgesehen, die individuell auf die Rahmenteile 14B einwirken, sodass wahlweise auch nur ein Rad 11 angehoben werden kann.

Das erfindungsgemässe Fahrwerk 1 erlaubt es daher, ein Radpaar bzw. eine Radachse in besonders einfacher Weise anzuheben und wieder abzusenken. Auch diese Funktion kann alternativ oder in Kombination mit den anderen Funktionen realisiert werden.

Insbesondere kann dieser Vorgang auch in Abhängigkeit der Einwirkungen auf das Fahrwerk 1 automatisch eingestellt werden. Falls der Steuerrechner 100 feststellt, dass der Fahrzeuganhänger 10 nicht beladen ist und auf einer asphaltierten Strasse fährt, kann ein Radpaar automatisch angehoben werden. Dabei wird vorzugsweise vorgesehen, dass die Radpaare eine unterschiedliche Bereifung aufweisen, sodass bei der Fahrt auf asphaltierten Strassen die Geräuschemissionen reduziert werden.

Fig. 4a zeigt eines der Fahrwerkteile 1A, 1B des Fahrwerks 1 von Fig. 2b, das mit einem Kraftübertragungsteil 16 in der Ausgestaltung einer Spiralfeder 16 versehen ist. Auf diese Weise kann eine besonders einfache und wirksame Federung beider Räder 11 realisiert werden. Das Fahrwerk 1 ist trotz der realisierten Federung ausserordentlich kompakt. Der Herstellungsaufwand ist entsprechend gering. Die Spiralfeder 16 kann mit einem weiteren Kraftübertragungsteil 16 kombiniert werden, z.B. mit einem hydraulischen Dämpfer, der von der Spiralfeder 16 umschlossen wird.

Ferner ist eine Messvorrichtung 925 vorgesehen, mittels der die Ausdehnung der Spiralfeder 16 bzw. des Abstandes der Flanschelemente 141 der Rahmenteile 14A, 14B und somit der Zustand des Fahrwerks und die Höhe der einwirkenden Last messbar ist. Die Messsignale sind über eine Messleitung 925 zu einem Steuerrechner 100 übertragbar, welcher die Bremsanlage 9 entsprechend ansteuert, um die Bremskraft bzw. den Druck in den Bremsleitungen 922 an die einwirkende Last anzupassen.

Fig. 4b zeigt das Fahrwerkteil 1A; 1B von Fig. 4a unter erhöhter Last mit weiter komprimierter Feder 16 und entsprechend reduzierter Distanz zwischen den Flanschelementen 141.

## Patentansprüche

1. Fahrwerk (1) für einen Fahrzeuganhänger (10), mit einer Bremsanlage (9) und mit zwei in Laufrichtung des Fahrwerks (1) ausgerichteten und miteinander verbundenen Fahrwerkteilen (1A, 1B), die je einen Achsrahmen (14) aufweisen, welche parallel zueinander ausgerichtet und frontseitig und rückseitig mit Radaufhängungen (15) und Rädern (11) versehen sind, **dadurch gekennzeichnet, dass** jeder der Achsrahmen (14) zwei Rahmenteile (14A, 14B) aufweist,
a) die an den voneinander abgewandten Enden je eine der Radaufhängungen (15) halten,
b) die an den einander zugewandten Enden durch eine Gelenkachse (12), welche die beiden Fahrwerkteile (1A, 1B) miteinander verbindet, drehbar miteinander verbunden sind, und
c) die durch wenigstens ein Kraftübertragungsteil (16) miteinander verbunden sind, welches mit einem ersten Endstück beabstandet von der Gelenkachse (12) mit dem einen Rahmenteil (14A) und mit einem zweiten Endstück beabstandet von der Gelenkachse (12) mit dem anderen Rahmenteil (14B) verbunden ist.

2. Fahrwerk (1) nach Anspruch 1, **dadurch gekennzeichnet, dass** das Kraftübertragungsteil (16) ein hydraulischer Dämpfer, ein pneumatischer Dämpfer oder eine Feder, vorzugsweise eine Spiralfeder ist oder dass jedem der Fahrwerkteile (1A, 1B) eine Kombination von Kraftübertragungsteilen (16) zugeordnet ist, die als hydraulischer Dämpfer, pneumatischer Dämpfer oder Feder ausgestaltet sind.

3. Fahrwerk (1) nach Anspruch 2, **dadurch gekennzeichnet, dass** das hydraulische Kraftübertragungsteil (16) vorzugsweise über ein Drosselrückschlagventil (82) mit einem hydraulischen Speicher und/oder einem hydropneumatischen Druckspeicher (81) verbunden ist.

4. Fahrwerk (1) nach Anspruch 1, 2 oder 3, **dadurch gekennzeichnet, dass** das Kraftübertragungsteil (16) in seinen geometrischen Abmessungen nicht komprimierbar ist oder dass das Kraftübertragungsteil (16) in seinen geometrischen Abmessungen elastisch komprimierbar ist.

5. Fahrwerk (1) nach Anspruch 4, **dadurch gekennzeichnet, dass** das Kraftübertragungsteil (16) jedes Fahrwerkteils (1A; 1B) individuell oder dass die Kraftübertragungsteile (16) der beiden Fahrwerkteile (1A, 1B) gemeinsam mit einer Steuervorrichtung oder Regelvorrichtung (8) verbunden und steuerbar sind, insbesondere um deren geometrischen Abmessungen und/oder deren Kompressibilität und/oder deren Federkonstante wahlweise oder in Abhängigkeit ermittelter Messwerte und Daten einzustellen.

6. Fahrwerk (1) nach Anspruch 5, **dadurch gekennzeichnet, dass** der Drehwinkel, den die beiden Rahmenteile (14A, 14B) einschliessen, mittels der Steuervorrichtung oder Regelvorrichtung (8) individuell oder gemeinsam für beide Fahrwerkteile (1A, 1B) steuerbar ist, um die Höhe und/oder Neigung des Fahrwerks (1) einzustellen.

7. Fahrwerk (1) einem der Ansprüche 1 - 6, **dadurch gekennzeichnet, dass** das Federverhalten oder Dämpfungsverhalten des Kraftübertragungsteils (16) mittels der Steuervorrichtung oder Regelvorrichtung (8) individuell oder gemeinsam für beide Fahrwerkteile (1A, 1B) einstellbar ist.

8. Fahrwerk (1) einem der Ansprüche 1 - 7, **dadurch gekennzeichnet, dass** eine Messvorrichtung (85; 925) vorgesehen ist, mittels der
a) der Drehwinkel, den die beiden Rahmenteile (14A, 14B) einschliessen; und/oder
b) der hydraulischer oder pneumatische Druck im Kraftübertragungsteil (16); und/oder
c) der Abstand zwischen zwei Punkten der beiden Rahmenteile (14A, 14B); und/oder
d) die auf das Kraftübertragungsteil (16) einwirkende Kraft;
messbar ist.

9. Fahrwerk (1) nach Anspruch 8, **dadurch gekennzeichnet, dass** die Bremsanlage (9) einen Bremskraftregler aufweist (92), mittels dessen eine einem Stellelement zugeführte Steuergrösse in Abhängigkeit
a) des Drehwinkels, den die beiden Rahmenteile (14A, 14B) einschliessen; oder
b) des hydraulischen oder pneumatischen Drucks im Kraftübertragungsteil (16); oder
c) des Abstand zwischen zwei Punkten der beiden Rahmenteile (14A, 14B); oder
d) der auf das Kraftübertragungsteil (16) einwirkende Kraft;
einstellbar ist.

10. Fahrwerk (1) nach einem der Ansprüche 1 - 9, **dadurch gekennzeichnet, dass** ein vorzugsweise hydraulischer Aktor (6) vorgesehen ist, der mit den frontseitigen oder rückseitigen Rahmenteilen (14A, 14B) verbunden ist, und der von der Steuervorrichtung (8) ansteuerbar ist, um die frontseitigen oder rückseitigen Rahmenteile (14A, 14B) anzuheben.

11. Fahrwerk (1) nach einem der Ansprüche 1 - 10, **dadurch gekennzeichnet, dass** die Steuervorrichtung oder Regelvorrichtung (8) einen Steuerrechner (100) mit einem Steuerprogramm (101) umfasst, mittels dessen das Kraftübertragungsteil (16) oder damit verbundene Aktoren und/oder der zum Anheben der frontseitigen oder rückseitigen Rahmenteile (14A, 14B) vorgesehene Aktor (6) betätigbar ist.

12. Fahrwerk (1) nach einem der Ansprüche 1 - 11, **dadurch gekennzeichnet, dass** eine Messvorrichtungen (88), wie eine Kamera oder ein Neigungssensor, zur Ermittlung von Topologie-Daten des Geländes vorgesehen ist oder dass Topologie-Daten aus einem lokalen oder dezentralen Speicher (89) abrufbar sind und dass die Kraftübertragungsteile (16) von der Steuervorrichtung (8) entsprechend den Topologie-Daten ansteuerbar sind, um die Fahrdynamik und/oder die Höhe und/oder die Neigung des Fahrwerks (1) einzustellen.

13. Fahrwerk (1) nach einem der Ansprüche 1 - 12, **dadurch gekennzeichnet, dass** die Rahmenteile (14A, 14B) vorzugsweise an den oberen Seiten Flanschelemente (141) aufweisen, an denen die Enden des Kraftübertragungsteils (16) befestigt sind.

14. Fahrwerk (1) nach einem der Ansprüche 1 - 13, **dadurch gekennzeichnet, dass** die frontseitigen Radaufhängungen (15) durch eine durchgehende Radachse miteinander oder durch Achsstummel mit den zugeordneten Rahmenteilen (14A, 14B) verbunden sind und/oder dass die rückseitigen Radaufhängungen (15) durch eine durchgehende Radachse miteinander oder durch Achsstummel mit den zugeordneten Rahmenteilen (14A, 14B) verbunden sind.

15. Fahrzeuganhänger (10) mit einem Fahrwerk (1) nach einem der Ansprüche 1 - 14, auf dem ein Fahrzeugaufbau (2) angeordnet ist.
